# EUROPÄISCHE PATENTSCHRIFT

(11) **EP 3 052 308 B1**
(45) Veröffentlichungstag und Bekanntmachung des Hinweises auf die Patenterteilung: **29.04.2020**
(21) Anmeldenummer: 14745135.5
(22) Anmeldetag: 31.07.2014
(51) Int. Cl.: B29C 73/16

(54) **SELBSTTÄTIG ABDICHTENDES REIFENDICHTMITTEL UND FAHRZEUGLUFTREIFEN**
SELF-SEALING TIRE SEALANT AND PNEUMATIC VEHICLE TIRE
AGENT D'ÉTANCHÉITÉ POUR PNEUMATIQUE À ÉTANCHÉITÉ AUTOMATIQUE ET PNEUMATIQUE DE VÉHICULE

(30) Priorität: 02.10.2013 DE 102013110977
(43) Veröffentlichungstag der Anmeldung: 10.08.2016
(73) Patentinhaber: Continental Reifen Deutschland GmbH, 30165 Hannover (DE)
(72) Erfinder: DAHLKE, Markus, 31515 Wunstorf (DE); GUARDALABENE, Joe, 30163 Hannover (DE); VÖLKER, Thomas, 30926 Seelze (DE); JEROMIN, Dieter, 30419 Hannover (DE); LIU, Fei, 30173 Hannover (DE); TYBURSKI, Andreas, 31241 Ilsede (DE); CONVEY, Martin, 30625 Hannover (DE)
(74) Vertreter: Finger, Karsten
(86) Internationale Anmeldenummer: PCT/EP2014/066451
(87) Internationale Veröffentlichungsnummer: WO 2015/049070

(56) Entgegenhaltungen:
- WO-A1-2012/065213
- US-A1- 2004 159 386
- US-A1- 2008 173 382
- US-A1- 2012 273 109

## Beschreibung

Die Erfindung betrifft ein selbsttätig abdichtendes Reifendichtmittel und einen Fahrzeugluftreifen mit einem in seinem Inneren an der dem Laufstreifen gegenüberliegenden Innenfläche vorab aufgebrachten, selbsttätig abdichtenden Reifendichtmittel.

Es ist bekannt, Fahrzeugluftreifen derart auszurüsten, dass sie sich bei Durchstich, Beschädigung des Reifens, selbstabdichtend verhalten.

So offenbaren beispielsweise die US 2004/159386 A1, die US 4068027 und die US 4113799 ein Reifendichtmittel auf der Basis eines vernetzten Butylkautschuks. Das Reifendichtmittel besteht dabei aus zwei Komponenten. Allerdings kommen hier zur Verdünnung der eingesetzten Kautschuke Lösungsmittel zum Einsatz, welche brennbar und gesundheitsschädlich sind.

In der DE 102007035192 A1 wird zur Vermeidung dieser Nachteile ein Reifendichtmittel beschrieben, welches als Dichtmittelkomponente einen Füllstoff enthält, dessen Dichtwirkung aus seiner Struktur resultiert, wobei der Füllstoff durch die Zentrifugalkraft beim Fahren an die Reifeninnenwandung gedrückt wird und sich dabei schichtenförmig an und/oder in und/oder über der Beschädigungsstelle bzw. Einstichstelle aufbaut. Als Füllstoff wurde in der DE 102007035192 A1 Muskovit-Glimmer eingesetzt. Derartige Füllstoffe, insbesondere Glimmer, weisen allerdings den Nachteil auf, dass sie als relativ großflächige Schichtsilikate die Haftung zwischen dem eingedrungenen Fremdkörper und dem Dichtmittel beeinträchtigen.

Zudem erhöht sich in den meisten Fällen aufgrund der größeren Dichte des Füllstoffs im Vergleich zum Dichtmittel die Masse des Reifens, was wiederum zu einer geringeren Leistung bei hoher Geschwindigkeit führt.

Der Erfindung liegt die Aufgabe zu Grunde, ein selbsttätig abdichtendes Reifendichtmittel bereitzustellen, welches im Vergleich zum Stand der Technik eine geringe Dichte (Masse pro Volumen) und eine hohe Dichtwirkung je Masseeinheit aufweist. Unter Dichtwirkung ist das Abdichten durch Fließen in eine Fehlstelle, z.B.: durch Beschädigung eines Reifens mit einem Nagel, und verstopfen dieser Fehlstelle sowie die Luftdichtigkeit zu verstehen.

Gelöst wird die gestellte Aufgabe erfindungsgemäß dadurch, dass das Reifendichtmittel Fragmente und/oder Rückstände expandierter Feststoffe enthält, wobei die Feststoffe ausgewählt sind aus der Gruppe enthaltend Blähgraphit und Mikrosphären, wobei die Mikrosphären eine Hülle aus wenigstens einem Polymer aufweisen.

Es ist zudem denkbar, dass es sich bei dem Feststoff um Glasperlen handelt.

Unter "Fragmente expandierter Feststoffe" ist im Rahmen der vorliegenden Erfindung zu verstehen, dass die Feststoffe nach dem Expandieren nicht mehr in der Form wie vor dem Expandieren vorliegen, sondern aufgrund der räumlichen Expansion in Form fester Bruchstücke, Fragmente, vorliegen.

Unter "Rückstände expandierter Feststoffe" ist im Rahmen der vorliegenden Erfindung zu verstehen, dass die Feststoffe nach dem Expandieren nicht mehr in der Form wie vor dem Expandieren vorliegen, sondern aufgrund der räumlichen Expansion in veränderter Form vorliegen, jedoch keine Fragmente aufweisen.

Somit ist es z.B. denkbar, dass bei expandierten Mikrosphären die Hülle räumlich expandiert ist ohne in Fragmente zerfallen zu sein, da wie unten erläutert, die Hülle der im Rahmen der vorliegenden Erfindung verwendeten Mikrosphären dehnbar ist und durch die Expansion des Treibgases ausgeweitet wird.

Die Feststoffe sind ausgewählt aus der Gruppe bestehend aus Blähgraphit und Mikrosphären. Das Reifendichtmittel enthält somit Fragmente und/oder Rückstände von expandierten Mikrosphären und/oder Fragmente und/oder Rückstände von expandiertem Blähgraphit, bzw. enthält das Reifendichtmittel bevorzugt expandierte Mikrosphären und/oder expandiertes Blähgraphit. Hierdurch ergibt sich eine geringere Dichte des Reifendichtmittels und damit ein geringeres Gewicht in der Anwendung im Reifen, was wiederum Vorteile beim Kraftstoffverbrauch ergibt. Zudem weist ein Fahrzeugluftreifen, der das erfindungsgemäße Reifendichtmittel enthält, eine gleiche oder sogar verbesserte Dichtwirkung auf, insbesondere Luftdichtigkeit und Abdichtwirkung durch die Möglichkeit bei gleichem Dichtmittelgewicht eine gleiche oder dickere Schichtdicke des Dichtmittels gegenüber dem Stand der Technik zu verwenden. Somit ist es möglich, je nach Schichtdicke des Dichtmittels den Reifen wirtschaftlicher und/oder hinsichtlich der Dichtwirkung leistungsfähiger auszugestalten.

Gemäß einer bevorzugten Ausführungsform der Erfindung beträgt die Gesamtmenge an expandiertem Feststoff in dem Reifendichtmittel 1 bis 20 Gew.-%, besonders bevorzugt 1 bis 10 Gew.-%.

Unter Mikrosphären werden im Rahmen der vorliegenden Erfindung Partikel verstanden, deren Durchmesser im Mikrometerbereich liegt. Dem Fachmann sind sowohl durchgängig feste (engl. "solid microspheres") als auch innen hohle

Mikrosphären (engl. "hollow microspheres") bekannt. Im Rahmen der vorliegenden Erfindung werden lediglich hohle Mikrosphären betrachtet, die außen eine dehnbare Hülle sowie im inneren wenigstens ein Gas aufweisen. Das Gas oder Gasgemisch im inneren der Mikrosphären wird auch als Treibmittel bezeichnet.

Die hohlen Mikrosphären können in expandierbare oder expandierte Mikrosphären unterteilt werden.

In dem erfindungsgemäßen Reifendichtmittel sind gemäß einer besonders bevorzugten Ausführungsform expandierte Mikrosphären enthalten, wobei das Treibmittel, z.B. durch vorheriges Erwärmen, expandiert ist, sodass die Hüllen der Mikrosphären ausgedehnt sind. Hierdurch weist das Reifendichtmittel geschlossene und/oder offene Poren auf, die wenigstens ein Gas enthalten. Bei dem Gas handelt es sich um ein Gemisch aus Luft und Treibmittel sowie gegebenenfalls chemische Derivate des Treibmittels. Die in dem Reifendichtmittel enthaltenen Mikrosphären weisen vor dem Expandieren bevorzugt einen Durchmesser von 0,5 bis 50 µm (Mikrometer), besonders bevorzugt 0,5 bis 40 µm, ganz besonders bevorzugt 1 bis 40 µm, wiederum ganz besonders bevorzugt 10 bis 30 µm, auf.

Die Hülle der in dem erfindungsgemäßen Reifendichtmittel enthaltenen Mikrosphären ist aus wenigstens einem Polymer aufgebaut und enthält besonders bevorzugt ein Co-Polymer aus Acrylnitril und Methylacrylat.

Zudem kann die Hülle der Mikrosphären Magnesiumoxid (MgO) enthalten.

Das Reifendichtmittel weist also, wenn Mikrosphären enthalten sind, Fragmente und/oder Rückstände der expandierten Hülle der Mikrosphären aus Acrylnitril und Methylacrylat sowie optional MgO auf. Hierbei ist es sowohl denkbar, dass die Hülle der expandierten Mikrosphären in Form von Fragmenten vorliegt als auch, dass die Hülle als Rückstand in Form einer durchgängigen Hülle vorliegt.

Bei dem erfindungsgemäßen Reifendichtmittel kann die Hülle der expandierten Mikrosphären über das Schwefelnetzwerk des Reifendichtmittels chemisch in die Polymermatrix des Reifendichtmittels angebunden sein. Alternativ kann die Hülle der Mikrosphären derart beschaffen sein, dass diese nicht mehr über Vernetzung an das Netzwerk des Reifendichtmittels angebunden werden kann.

Die Dicke der Hülle der in dem Reifendichtmittel enthaltenen Mikrosphären beträgt vor der Expansion bevorzugt 0,1 bis 5 µm (Mikrometer).

Das Treibmittel der in dem erfindungsgemäßen Reifendichtmittel enthaltenen Mikrosphären enthält bevorzugt Isobutan und/oder Isopentan.

Es ist im Rahmen der vorliegenden Erfindung denkbar, dass das erfindungsgemäße Reifendichtmittel ein Gemisch aus Mikrosphären aufweist, die einen unterschiedlichen Durchmesser aufweisen und die ausgehend von ihrem Anfangsdurchmesser sich unterschiedlich stark ausgeweitet haben, wobei es auch denkbar ist, dass einige Mikrosphären kaum oder gar nicht ausgeweitet sind und somit ihren Anfangsdurchmesser beibehalten. Der Durchmesser der Mikrosphären beträgt demnach nach der Expansion 0,5 bis 250 µm, bevorzugt 0,5 bis 100 µm, besonders bevorzugt 80 bis 100 µm. Dies bedeutet, dass besonders bevorzugt alle Mikrosphären expandiert sind.
Bei der Expansion bleibt die nach außen feste Struktur der Mikrosphären vollständig und/oder teilweise erhalten. Das heißt, dass die Hülle dehnbar ist und durch die Ausbreitung des Gases z.B. durch Erwärmen ausgeweitet wird, d.h. die Mikrosphären expandieren räumlich.

Enthält das erfindungsgemäße Reifendichtmittel als expandierte Feststoffe lediglich expandierte Mikrosphären, so beträgt die Menge an Mikrosphären bezogen auf die Gesamtmenge des Reifendichtmittels 0,5 bis 3 Gew.-%, bevorzugt 0,5 bis 2,5 Gew.-%, besonders bevorzugt 1,0 bis 2,5 Gew.-%, ganz besonders bevorzugt 1,8 bis 2,2 Gew.-%. Hierdurch wird eine besonders gute Dichtwirkung bei einer geringen Dichte des erfindungsgemäßen Reifendichtmittels erzielt.

Unter Blähgraphit wird im Rahmen der vorliegenden Erfindung Graphit mit einer Schichtgitterstruktur verstanden, bei dem zwischen den Schichten Atome oder Moleküle, insbesondere Schwefel- oder Stickstoffverbindungen, eingelagert, auch interkaliert genannt, sind. Bevorzugt sind wenigstens Schwefelsäure-Moleküle, also Moleküle der Summenformel H₂SO₄, im Blähgraphit interkaliert.
Gemäß Römpp Online Lexikon, Version 3.36 bezeichnet man "als Graphen ... eine planare, hexagonale Anordnung von Kohlenstoff-Atomen, die in ihrer Struktur einer monomolekularen Schicht Graphit entspricht (Wabenstruktur)."
Somit befinden sich beim Blähgraphit zwischen einzelnen Graphen-Lagen die interkalierten Verbindungen. Im Idealfall befindet sich die interkalierte Verbindung zwischen jeder Monolage des Graphits. Im Realfall ist es jedoch denkbar, dass einige Graphit-Schichten keine interkalierten Verbindungen aufweisen.
Beim Erwärmen expandiert Blähgraphit räumlich, wodurch die interkalierte Verbindung, bevorzugt wenigstens eine Stickstoff oder Schwefelverbindung, vorzugsweise SO₂ und/oder H₂SO₄, bzw. Derivate davon freigesetzt werden und zudem Graphen-Strukturen im Reifendichtmittel entstehen. Das Reifendichtmittel weist demnach, wenn Blähgraphit enthalten ist, als Fragmente des expandierten Blähgraphits Graphen-Strukturen auf. Mit anderen Worten enthält das erfindungsgemäße Reifendichtmittel Graphen, wenn es expandiertes Blähgraphit enthält. Diese Strukturen treten im Idealfall hauptsächlich auf, wobei es aber auch denkbar ist, dass Strukturen entstehen, bei denen noch einige Graphit-Lagen zusammenhaften (s. oben), sodass das erfindungsgemäße Reifendichtmittel Graphit und/oder Graphen enthält.

In dem erfindungsgemäßen Reifendichtmittel ist gemäß einer besonders bevorzugten Ausführungsform expandiertes Blähgraphit enthalten, wobei das Reifendichtmittel Graphen-Strukturen aufweist, die sich durch Expandieren des Blähgraphits, z.B. durch Erwärmen, bilden. Alternativ kann auch vorgeblähtes Graphit in das Reifendichtmittel eingemischt werden.
Die im Reifendichtmittel gemäß dieser Ausführungsformen enthaltenen Graphen-Strukturen bewirken eine gute Luftdichtigkeit des Reifendichtmittels.
Zudem hat Blähgraphit den Vorteil des Flammschutzes. Bevorzugt ist das in dem erfindungsgemäßen Reifendichtmittel enthaltene Blähgraphit bei einer Temperatur von 130 °C oder mehr expandiert, bevorzugt 150 °C oder mehr, besonders bevorzugt 150 °C bis 230 °C, ganz besonders bevorzugt 170 bis 230 °C. Das bei dem erfindungsgemäßen Verfahren verwendete Blähgraphit weist vor dem Expandieren bevorzugt eine Teilchengröße von 0,5 bis 1500 µm (Mikrometer), besonders bevorzugt 200 bis 1500 µm, ganz besonders bevorzugt 200 bis 1000 µm auf.
Das bei in dem erfindungsgemäßen Reifendichtmittel enthaltene Blähgraphit enthält bevorzugt wenigstens interkalierte Schwefelsäure, H₂SO₄.

Enthält das erfindungsgemäße Reifendichtmittel als expandierten Feststoff lediglich expandiertes Blähgraphit, so beträgt die Menge an Blähgraphit bezogen auf die Gesamtmenge des Reifendichtmittels 0,5 bis 10 Gew.-%, bevorzugt 0,5 bis 8 Gew.-%, besonders bevorzugt 2,0 bis 8 Gew.-%, ganz besonders bevorzugt 3 bis 8 Gew.-%. Hierdurch wird eine besonders gute Dichtwirkung bei einer geringen Dichte des erfindungsgemäßen Reifendichtmittels erzielt.

Es ist zudem denkbar, dass das Reifendichtmittel gemäß einer Ausführungsform der Erfindung z.B. Mikrosphären und Blähgraphit in Kombination enthält. Hierbei gelten für die Merkmale der Mikrosphären und des Blähgraphits ebenfalls die unter den anderen Ausführungsformen genannten bevorzugten Merkmale, wie Temperaturbereich der Expansion, Teilchengröße vor der Expansion.

Der Durchmesser der im Rahmen der vorliegenden Erfindung diskutierten Mikrosphären und die Teilchengröße des Blähgraphits wird lichtmikroskopisch bestimmt. Hierbei ist unter Teilchengröße der größtmögliche Abstand in der zweidimensionalen Projektion eines Blähgraphit-Partikels unter dem Lichtmikroskop zu verstehen.
Da Mikrosphären sphärisch geformt sind, ist der Durchmesser auch hier der größtmögliche Abstand in der zweidimensionalen Projektion unter dem Lichtmikroskop.

Das erfindungsgemäße Dichtmittel enthält wenigstens ein Polymer.
Das Polymer des Reifendichtmittels kann jedes im Stand der Technik für Reifendichtmittel von Fahrzeugluftreifen bekannte Polymer sein. Bevorzugt handelt es sich bei dem Polymer um Polyurethan (PU) und/oder Polyisobutylen (PIB) und/oder Polybuten (PB) und/oder Butylkautschuk (Isobutylen-Isopren-Co-Polymer, IIR) und/oder Silikonkautschuk. Besonders bevorzugt enthält das erfindungsgemäße Reifendichtmittel zumindest Butylkautschuk als Polymer. Hierdurch können in den Ausführungsformen der Erfindung, bei denen das Reifendichtmittel Mikrosphären enthält diese über ihre Hülle und das bei Butylkautschuk vorhandene Schwefelnetzwerk an die Butylkautschukmatrix angebunden werden, wodurch sich eine verbesserte Ermüdungsbeständigkeit des Reifendichtmittels ergibt.

Das erfindungsgemäße Reifendichtmittel enthält wenigstens einen Vernetzer.

Als Vernetzer kommen alle dem Fachmann bekannten Vernetzer in Frage. Bevorzugt enthält das erfindungsgemäße Reifendichtmittel wenigstens Schwefel als Vernetzer, insbesondere, wenn als Polymer Butylkautschuk enthalten ist.

Ferner kann das Reifendichtmittel übliche Bestandteile enthalten. Darunter zählen insbesondere wenigstens einen Aktivator, wie z.B. Zinkoxid (ZnO) und/oder Weichmacher, wie z.B. paraffinisches oder naphthenisches Öl, und/oder ein oder mehrere Verarbeitungshilfsmittel, wie z.B. Alkyl- oder Phenolharze, und/oder ein oder mehrere Füllstoff(e), wie z.B. Ruß oder Kieselsäure, und/oder ein oder mehrere Alterungsschutzmittel, z.B. PPD's.

Der Erfindung liegt weiterhin die Aufgabe zu Grunde, einen Fahrzeugluftreifen mit einem in seinem Inneren an der dem Laufstreifen gegenüberliegenden Innenfläche vorab aufgebrachten, selbsttätig abdichtenden Reifendichtmittel bereitzustellen, der im Vergleich zum Stand der Technik ein geringeres Gewicht aufweist, wobei die abdichtende Wirkung nicht negativ beeinträchtigt werden und/oder verbessert werden soll. Die sonstigen Eigenschaften, wie insbesondere Abriebverhalten und/oder Nassbremsen und/oder Trockenbremsen und/oder Handling-Verhalten und/oder die Reißeigenschaften und/oder das Rollwiderstandsverhalten sollen nicht nachteilig beeinflusst werden.

Gelöst wird die gestellte Aufgabe erfindungsgemäß dadurch, dass der Fahrzeugluftreifen in seinem Inneren an der dem Laufstreifen gegenüberliegenden Innenfläche das oben beschriebene erfindungsgemäße Reifendichtmittel aufweist. Hierbei gelten für das Reifendichtmittel alle oben genannten Merkmale und Ausführungsformen.
Somit weist der erfindungsgemäße Fahrzeugluftreifen, der im Reifendichtmittel Fragmente und/oder Rückstände expandierter Feststoffe enthält, durch die geringere Dichte des Reifendichtmittels ein geringeres Reifengewicht auf. Bevorzugt handelt es sich bei den expandierten Feststoffen um Fragmente von expandiertem Blähgraphit, also Graphen-Strukturen, und/oder Fragmente und/oder Rückstände von expandierten Mikrosphären wie oben beschrieben.
Ferner weist der erfindungsgemäße Fahrzeugluftreifen in den Ausführungsformen, in denen es sich bei dem expandierten Feststoff um Blähgraphit handelt im Vergleich zum Stand der Technik einen verbesserten Flammschutz auf bei einer gleichbleibenden oder verbesserten Dichtwirkung im Pannenfall aufgrund der guten Luftdichtigkeit des Blähgraphits bzw. der daraus entstehenden Graphen oder Graphen-ähnlichen Strukturen.
Ferner weist der erfindungsgemäße Fahrzeugluftreifen in den Ausführungsformen, in denen es sich bei dem expandierten Feststoff um Mikrosphären handelt im Vergleich zum Stand der Technik eine gleichbleibende oder verbesserte Dichtwirkung auf.

Die Schichtdicke des Reifendichtmittels des erfindungsgemäßen Fahrzeugluftreifens ist eine im Stand der Technik bekannte Schichtdicke. Der erfindungsgemäß ausgeführte Fahrzeugluftreifen weist daher ein geringeres Gewicht auf, als ein Fahrzeugluftreifen, dessen Reifendichtmittel ohne gasgefüllte Poren ausgeführt ist, wobei die Dichtwirkung gegenüber dem Stand der Technik gleich und/oder verbessert ist.
Bevorzugt beträgt die Schichtdicke des Reifendichtmittels zwischen 0,5 mm und 8 mm. Diese Schichtdicken entsprechen im Stand der Technik bekannten Schichtdicken von Reifendichtmitteln in Fahrzeugluftreifen.
Bevorzugt ist die Innenfläche des Fahrzeugluftreifens, auf die das Reifendichtmittel aufgetragen wird, eine luftdicht ausgeführte Innenschicht (in der Fachwelt auch als Innenseele oder Innerliner bezeichnet) oder die radial innerste Karkasslage. Für eine ausreichende Luftdichtigkeit des Fahrzeugluftreifens, weist der erfindungsgemäße Fahrzeugluftreifen das Reifendichtmittel bevorzugt auf der luftdichten Innenschicht auf.

Im folgenden soll die Erfindung anhand von Ausführungsbeispielen von Fahrzeugluftreifen erläutert werden. Hierbei stellen die mit "V" gekennzeichneten Beispiele Vergleichsbeispiele dar, während es sich bei den mit "E" gekennzeichneten Beispielen um erfindungsgemäße Beispiele handelt.
V1:
   Herstellung des Reifendichtmittels aus zwei Komponenten A und B, wobei im Stand der Technik bekannte Mengen der angegebenen Substanzen verwendet wurden:
   Herstellung der Komponente A: Vermischen von Butylkautschuk, Schwefel (Vernetzer) sowie paraffinischem Öl, wobei Vorrichtungen und Verfahrens schritte wie in der WO 2008/141848 A1 beschrieben verwendet wurden.
   Komponente B: Polybuten-Lösung und Zinkoxid (Aktivator) wurden miteinander vermischt, wobei Vorrichtungen und Verfahrensschritte wie in der WO 2008/141848 A1 beschrieben verwendet wurden.
   Die Komponenten A und B wurden bei einer Temperatur von 100 bis 140 °C miteinander vermischt, wobei Vorrichtungen und Verfahrensschritte wie in der WO 2008/141848 A1 beschrieben verwendet wurden.
   Das Gemisch aus A und B (Reifendichtmittel) wurde über eine Düse auf die dem Laufstreifen gegenüberliegende Innenfläche eines vulkanisierten Fahrzeugluftreifens aufgesprüht, und zwar mit einer Schichtdicke von 4mm.
V2:
   Wie V1, nur dass die Schichtdicke des Reifendichtmittels nach dem Auftragen 2,4 mm betrug.
E1:
   Wie V2, mit dem Unterschied, dass in Komponente B Mikrosphären (2 Gew.% Mikrosphären bezogen auf die Gesamtmasse des Reifendichtmittels, also auf die Gesamtmenge der Bestandteile in A und B), Handelsname Expancel 031 DUX 40, in die Polybuten-Lösung gemischt wurden. Die Schichtdicke nach der Expansion der Mikrosphären (Expansion durch die entstehende Wärme beim Vermischens der Komponenten A und B) ist mit der Schichtdicke aus V1 vergleichbar.
V3:
   Wie E1, mit dem Unterschied, dass das Reifendichtmittel 4 Gew.% Mikrosphären (bezogen auf die Gesamtmasse des Reifendichtmittels, also auf die Gesamtmenge der Bestandteile in A und B) enthält und die Schichtdicke vor der Expansion 1,5 mm betrug. Nach der Expansion ist die Schichtdicke mit der Schichtdicke aus V1 und E1 vergleichbar.

Sämtliche Fahrzeugluftreifen wurden gewogen und auf ihre Luftdichtigkeit getestet. Hierbei wurde jeder Reifen mit Nägeln beschädigt und auf dem Reifenprüfstand nach Druckverlust gemessen. Bei keinem Druckverlust wird der Reifen als luftdicht bewertet, da das Reifendichtmittel die Fehlstelle abdichtet (Luftdichtigkeit des Reifens: ja).

**Tabelle 1**

| | Einheit | V1 | V2 | E1 | V3 |
|---|---|---|---|---|---|
| Mikrosphären im Reifendichtmittel | Gew.% | - | - | 2 | 4 |
| | | | | | |
| Schichtdicke vor der Expansion | mm | 4,0 | 2,4 | 2,4 | 1,5 |
| Schichtdicke nach der Expansion | mm | 4,0 | 2,4 | 3,7 | 3,6 |
| Gewicht des Fahrzeugluftreifens | kg | 11,2 | 10,8 | 10,7 | 10,4 |
| Dichte des Reifendichtmittels | g/cm³ | 0,95 | 0,95 | 0,81 | 0,52 |
| Luftdichtigkeit des Fahrzeugluftreifens | ja/nein | ja | nein | ja | nein |

Wie aus Tabelle 1 ersichtlich wird, weist der erfindungsgemäße Fahrzeugluftreifen E1 im Vergleich zu dem Vergleichsbeispielen V1 bei vergleichbarer Schichtdicke des Reifendichtmittels nach der Expansion der in E1 enthaltenen Mikrosphären ein geringeres Reifengewicht auf. Die Gewichtsreduktion ist auf die geringere Dichte der Reifendichtmittel der erfindungsgemäßen Beispiele zurückzuführen.
Wie das Vergleichsbeispiel V2 zeigt, führt die Verringerung der Schichtdicke des Reifendichtmittels ohne Zusatz von Mikrosphären nicht zu einer ausreichenden Luftdichtigkeit. Eine zu große Menge an Mikrosphären verringert die Abdichtwirkung aufgrund des veränderten Fließverhaltens des Reifendichtmittels, wie an Vergleichsbeispiel V3 erkennbar.

## Patentansprüche

1. Selbsttätig abdichtendes Reifendichtmittel, **dadurch gekennzeichnet, dass** es Fragmente und/oder Rückstände expandierter Feststoffe enthält, wobei die Feststoffe ausgewählt sind aus der Gruppe enthaltend Blähgraphit und Mikrosphären, wobei die Mikrosphären eine Hülle aus wenigstens einem Polymer aufweisen.

2. Selbsttätig abdichtendes Reifendichtmittel nach Anspruch 1, **dadurch gekennzeichnet, dass** die Mikrosphären als Treibmittel wenigstens Isobutan und/oder Isopentan enthalten.

3. Selbsttätig abdichtendes Reifendichtmittel nach einem der Ansprüche 1 oder 2, **dadurch gekennzeichnet, dass** die Mikrosphären eine Hülle aus wenigstens einem Co-Polymer aus Acrylnitril und Methylacrylat aufweisen.

4. Selbsttätig abdichtendes Reifendichtmittel nach einem der vorherigen Ansprüche, **dadurch gekennzeichnet, dass** es Graphen-Strukturen aufweist.

5. Fahrzeugluftreifen, **dadurch gekennzeichnet, dass** er in seinem Inneren an der dem Laufstreifen gegenüberliegenden Innenfläche ein selbsttätig abdichtendes Reifendichtmittel gemäß Anspruch 1 aufweist.

6. Fahrzeugluftreifen nach Anspruch 5, **dadurch gekennzeichnet, dass** die Schichtdicke des Reifendichtmittels 0,5 bis 8 mm beträgt.

## Claims

1. Self-sealing tyre sealant, **characterized in that** it contains fragments and/or residues of expanded solids, wherein the solids are selected from the group containing expanded graphite and microspheres, wherein the microspheres have a casing made of at least one polymer.

2. Self-sealing tyre sealant according to Claim 1, **characterized in that** the microspheres contain at least isobutane and/or isopentane as a propellant.

3. Self-sealing tyre sealant according to either of Claims 1 and 2, **characterized in that** the microspheres have a casing made from at least one co-polymer of acrylonitrile and methyl acrylate.

4. Self-sealing tyre sealant according to one of the preceding claims, **characterized in that** it has graphene structures.

5. Pneumatic vehicle tyre, **characterized in that** it has a self-sealing tyre sealant according to Claim 1 in its interior, on the inner surface opposite the tread.

6. Pneumatic vehicle tyre according to Claim 5, **characterized in that** the layer thickness of the tyre sealant is 0.5 to 8 mm.

## Revendications

1. Agent d'étanchéité pour pneu à étanchéité automatique, **caractérisé en ce qu'**il contient des fragments et/ou des résidus de matériaux expansés, les matériaux étant choisi dans le groupe contenant le graphite expansé et les microsphères, les microsphères présentant une enveloppe composée d'au moins un polymère.

2. Agent d'étanchéité pour pneu à étanchéité automatique selon la revendication 1, **caractérisé en ce que** les microsphères contiennent au moins de l'isobutane et/ou de l'isopentane en tant que propulseur.

3. Agent d'étanchéité pour pneu à étanchéité automatique selon l'une des revendications 1 et 2, **caractérisé en ce que** les microsphères présentent une enveloppe composée d'au moins un copolymère d'acrylonitrile et d'acrylate de méthyle.

4. Agent d'étanchéité pour pneu à étanchéité automatique selon l'une quelconque des revendications précédentes, **caractérisé en ce qu'**il présente des structures de graphène.

5. Pneumatique de véhicule, **caractérisé en ce qu'**il présente dans sa partie intérieure, au niveau de la surface intérieure opposée à la bande de roulement, un agent d'étanchéité pour pneu à étanchéité automatique selon la revendication 1.

6. Pneumatique de véhicule selon la revendication 5, **caractérisé en ce que** l'épaisseur de couche de l'agent d'étanchéité pour pneu est de 0,5 à 8 mm.
